# EUROPEAN PATENT APPLICATION

(11) **EP 0 741 962 A1**
(43) Date of publication of application: **13.11.1996**
(21) Application number: 96106424.3
(22) Date of filing: 24.04.1996
(51) Int. Cl.: A01D 46/24

(54) **Fruit picking apparatus**

(30) Priority: 11.05.1995 IL 11368695
(71) Applicant: Netanya Istam Ltd., Netanya South 42101 (IL)
(72) Inventor: Stambulski, Yitzhak, Netanya 42279 (IL); Stambulski, Lev, Netanya, 42279 (IL)
(74) Representative: Howden, Christopher Andrew

(57) **Abstract**

Fruit picking apparatus for picking fruits, having stems like cherries, plums or other drupes.

The apparatus is provided with a cutting assembly (20), operatively coupled with a drive means (13).

The cutting assembly comprises a knife member (23) situated between two plates (21,22). The knife member (23) and the plates (21,22) are formed as elongated combs with teeth (210,210',220,220',230,230'). The knife member receives reciprocating motion from the driving means and slides forward and backward with respect to plates. By virtue of this reciprocating motion the teeth of the knife member cut the stems, entering between corresponding teeth of plates and at the same time there is enabled flattening of free ends of cut stems.

## Description

### Field of the invention

The present invention relates to fruit picking and, more particularly, to equipment for picking fruits with stems, e.g., cherries, with the possibility of prolonged storage thereof in a fresh condition.

The present invention can also be implemented also in fruit harvesting equipment intended for picking other drupes, e.g., plums.

### Background of the Invention:

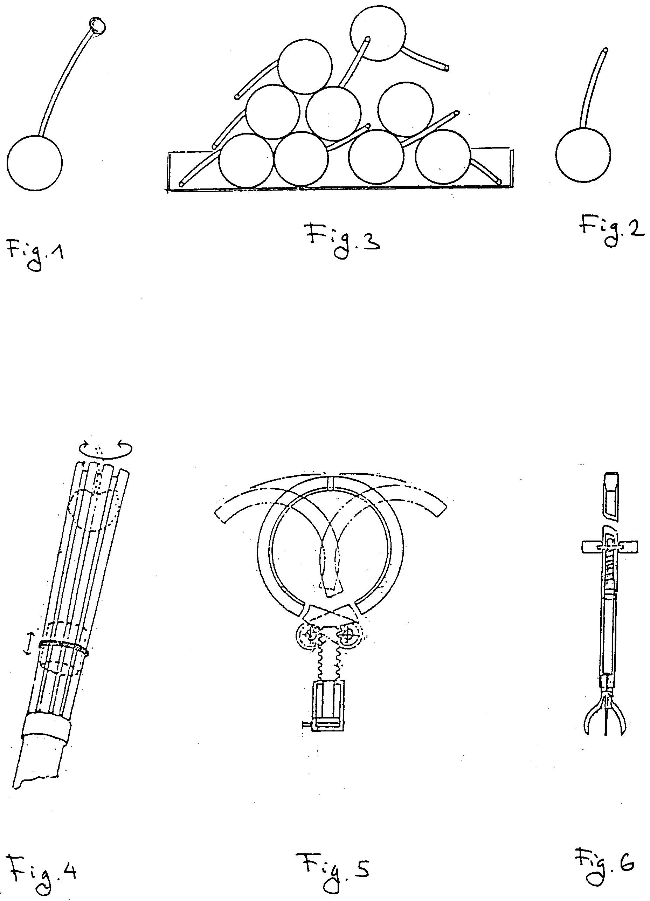

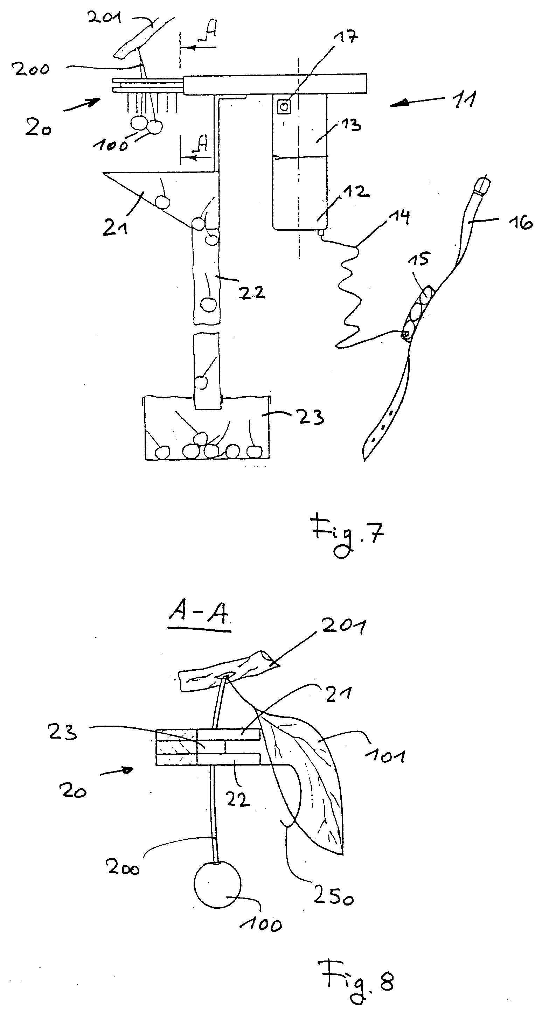

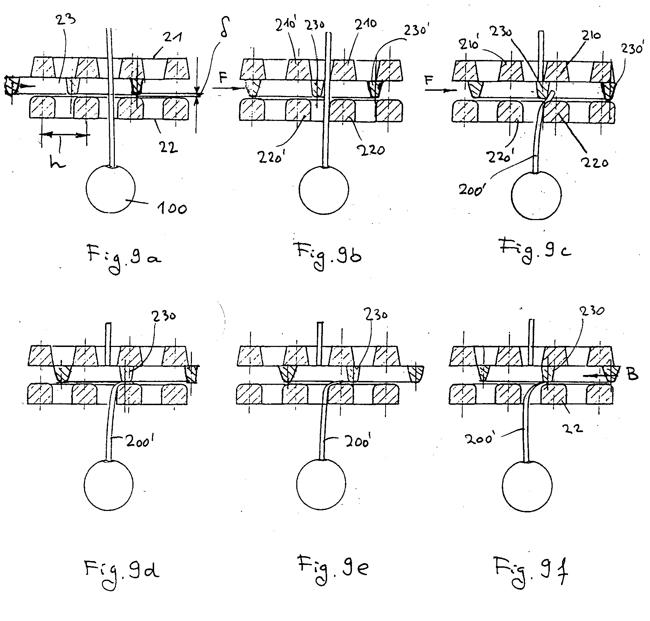

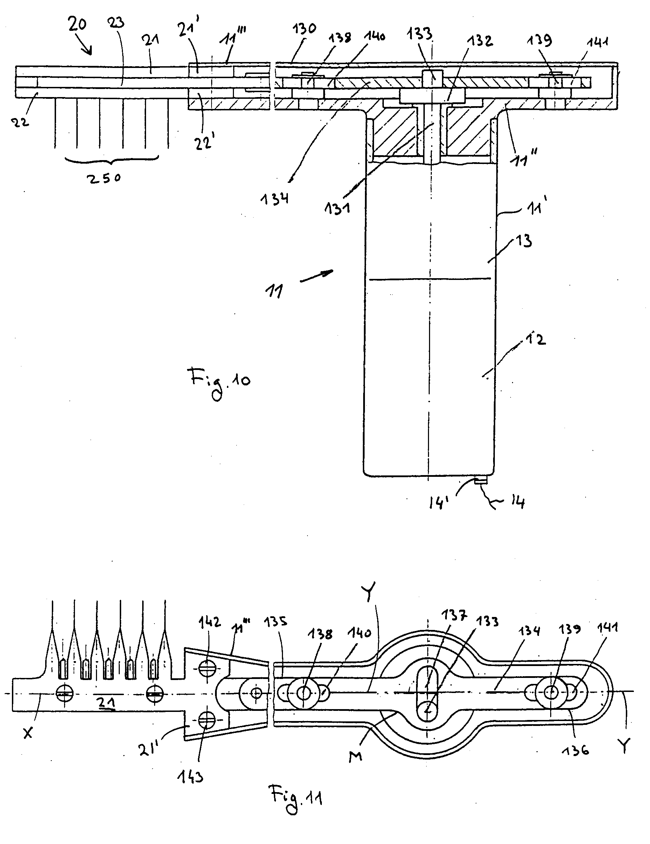

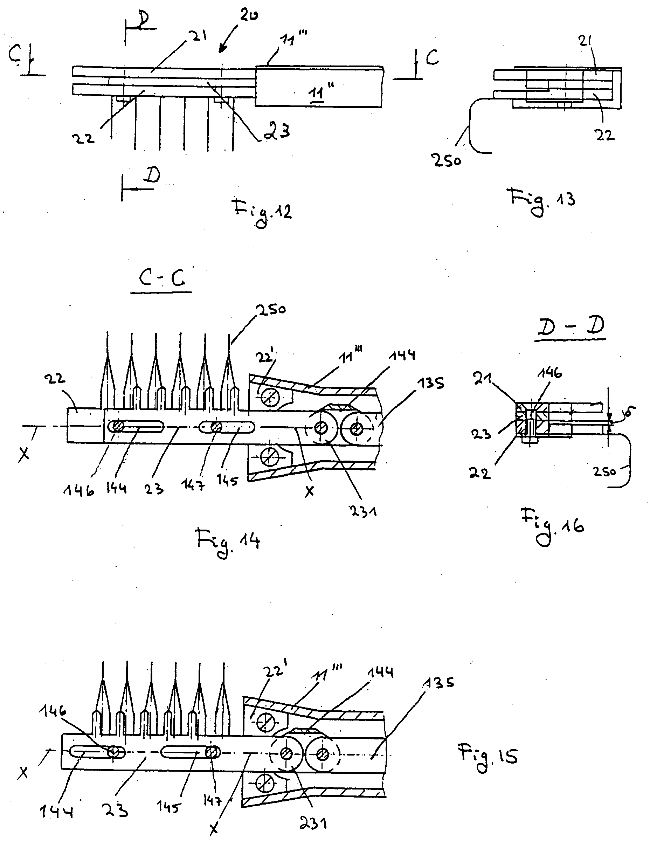

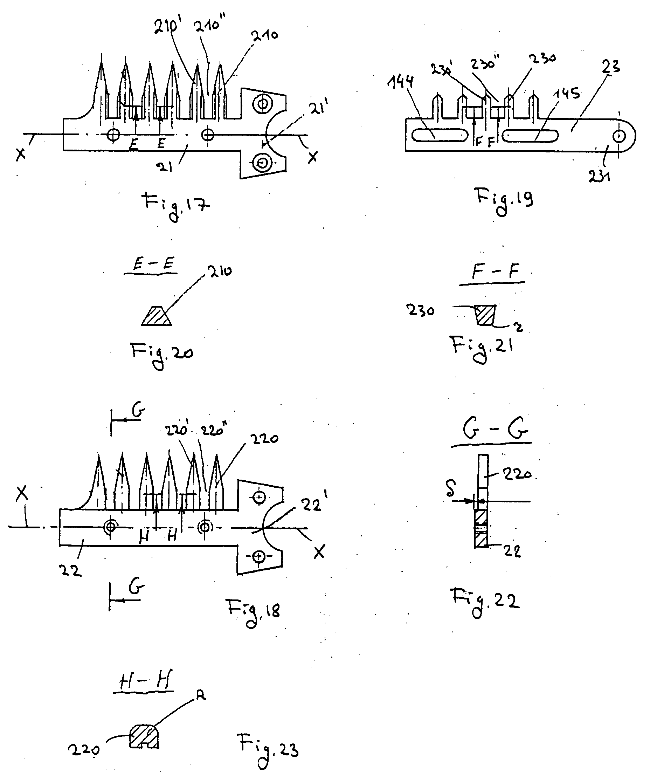

One of the problems associated with picking fruits, which have stems, is damaging of the fruit rind while plucking the stem from the joint point. Damaged skins result in juice outflow with subsequent spoiling of the fruit, thus limiting its shelf life. The most desirable mode of picking such fruits would be that which allows the stem to remain intact with a bulbous end as shown in fig.1. However, picking cherries without tearing off the stems and damaging the fruit is a labor consuming process; since to avoid damage, this is usually performed only manually.

There are other known methods and devices for harvesting cherries or other drupes in which the stem is cut from the tree branch. It can be realized, that this method of harvesting is much faster and is easier for automatization. However it inevitably leaves severed stems with sharp edges, as shown in fig.2. This, in turn, is associated with the above mentioned disadvantage that when the fruits are stored in bulk the sharp stem ends may pierce the skin of some neighboring fruits and thus damage it.

This situation is shown in fig.3.

In practice different devices are known for harvesting cherries by both methods, namely by picking thereof with or without stems or by means of cutting the stems.

For example, figs. 4,6 shows how cherries are picked with stems by means of a twisting or gripping action. Devices implementing this approach are disclosed in GB 2611423 or FR2611423. Although these devices enable picking which is not harmful to the skin fruit; nevertheless operation is inefficient and is associated with a rather low production rate since each fruit has to be gripped and twisted very carefully without the possibility of handling several fruits simultaneously.

A typical example of a device implementing the cutting of stems for harvesting cherries is described in JP4-54974. This device is formed as a scissors arrangement provided with arched blades, as shown in fig.5. This device allows for reasonable production rate; nevertheless, it intrinsically has the above mentioned disadvantage associated with damaging the skin of neighboring fruits due to the free sharp ends of the cut stems.

It can be readily appreciated that despite the many different known devices for picking cherries, the problem of harvesting such and similar fruits with reasonable production rate and at the same time without damage of the fruit and therefore without shortening of fruit shelf life, still needs a solution.

### Object of the Invention

The object of the present invention is to provide a fruit picking device, for harvesting cherries or other drupes which have stems, in which the above mentioned drawbacks of known devices and methods are sufficiently reduced or overcome.

In particular the main object of the present invention is to provide a simple, portable, hand-operated and efficient fruit picking device enabling simultaneous harvesting of a plurality of fruits, thus ensuring a high production rate.
The second object of the present invention is to provide a fruit picking device to harvest cherries by cutting their stems in such a manner, that the cut fruits can be stored without the danger of the free ends of cut stems piercing their skins and therefore providing increased shelf life of the freshly picked fruits.

The above and other objects and advantages of the present invention can be achieved in accordance with the following combination of its essential features:

An apparatus for picking of fruits having stems, e.g. cherries, said apparatus comprising:
- a body portion for mounting thereon a cutting assembly provided with a knife member, enabling cutting of stems
- a drive means, provided with a motor and being operatively coupled with said cutting assembly so as to establish reciprocating sliding motion of said knife member
- a source of energy for activating of said drive means; said cutting assembly is formed as the first and second oppositely situated side plates with said knife member being located therebetween with possibility for relative reciprocating sliding motion forwards and backwards along said plates; said knife member and said plates being configured as elongated combs, defined by the plurality of teeth, interspaced by a distance and said side plates being situated in such a manner, that their teeth are aligned therebetween so as to enable receiving of uncut stems between adjacent teeth; the teeth of said first plate and of knife member are formed with at least one sharp edge, enabling the cutting of stems entering therebetween; the teeth of said second side plate are formed with at least one edge enabling flattening of free ends of cut stems during the sliding motion of said knife member.

In one of the preferred embodiments of the present invention the distance between the adjacent teeth of said side plates is less than the length of a stroke of said knife member in forward or backward direction, wherein said knife member is situated between said side plates in such a manner that the plane thereof facing the first side plate is in close proximity thereto and the plane thereof facing said second side plate is spaced therefrom by a gap.

In the other preferred embodiment the mutually facing edges of the teeth of said first side plate and of said knife member are sharpened so as to enable efficient cutting of stems. The mutually facing edges of the teeth of said second side plate and of said knife member are radiused so as to enable flattening of the free ends of cut stems.

In a further preferred embodiment of said apparatus for picking fruits it is formed as a portable, compact hand-operated picker, wherein said drive means is mounted within said body portion and said source of energy is attached to a belt to be worn by an operator.

In a still further preferred embodiment the apparatus, in accordance with the present invention, is provided with a pushing means for pushing leaves away from said cutting assembly, said pushing means being formed as a plurality of biased spring members, attached to one of the said side guiding plates.

In accordance with another preferred embodiment the apparatus is provided with a chute for receiving picked fruits and discharging them into a collecting receptacle.

The present invention in its various above mentioned embodiments has only been briefly summarized.

For a better understanding of the present invention as well of its advantages, reference will now be made to the following description of its embodiments taken in combination with accompanying drawings.

### Brief Description of the Drawings

Figs.1,2,3,4,5,6 schematically illustrate the problem associated with picking cherries and damaging the skin of the freshly picked fruit by the free ends of cut stems as well some of the prior state-of-the-art devices developed for harvesting of same.
Fig. 7 is a general view of an apparatus for picking of cherries in accordance with the present invention.
Fig. 8 is an enlarged view of a cross-section of fig.7 taken along A-A.
Figs.9 a,b,c,d,e,f schematically illustrate successive steps of the cutting and flattening action achieved by the apparatus according to the present invention.
Fig. 10 is a side view of the body portion with cutting assembly mounted thereon.
Fig. 11 is a top view, corresponding to fig.10.
Figs.12,13 are respectively side and front views of a cutting assembly in accordance with the present invention.
Figs. 14 is a cross-section of fig.12 along C-C showing the rearmost disposition of the knife member at the end of sliding motion thereof in the backward direction.
Fig.15 is a cross-section of fig.12 along C-C showing the foremost disposition of the knife member at the end of sliding motion thereof in the forward direction.
Fig.16 shows a cross-section of fig. 12 along D-D.
Figs.17,18,19 show top views of the first and second side plates, respectively, and of the the knife member employed in the cutting assembly.
Figs. 20,21,22,23 are cross-sections of figs.17,18,19 taken along E- E,F- F,G- G and H- H, respectively.

### Detailed Description of Specific Embodiments

With reference to fig.7 the apparatus for simultaneous picking of a plurality of cherries 100 in accordance with the present invention comprises the body portion 11 with attached thereto cutting assembly 20 for cutting stems 200 of cherries growing on a branch 201.

Detailed construction and principle of operation of this assembly will be explained further.

To effect the cutting action the cutting assembly is operatively coupled with an electromechanical drive means 13, provided with a motor 12, which communicates via wiring 14 with an external source of energy, e.g. a replaceable pack of dry or rechargeable batteries 15. In one of the preferred embodiments, as shown in fig.7 the source of energy is formed as an external autonomous unit, attachable to a belt 16 to be worn by an operator. By virtue of this provision the apparatus becomes portable and can easily be manually operated. It should be readily appreciated, that the source of energy can also be formed as a dedicated built-in unit associated with the motor or as a net AC/DC power supply.

To energize or de-energize the motor, an on-off knob 17 is provided, which can be easily accessed by an operator.

Now, with reference to figs.8,9, the principle of cutting and bending of stems by a picking apparatus in accordance with the present invention, will be explained.

The cutting assembly 20 is comprised of a first and second side plates 21, 22 and situated therebetween a knife member 23, which can be driven by a drive means so as to enable relative sliding thereof in a reciprocating fashion along the plates.
The side plates and knife member are configured as flat elongated combs, defined by a plurality of teeth interspaced by a free space defined by a distance, which exceeds the thickness of stems to be cut.

By virtue of this provision when the operator brings the apparatus close to the branch 201, the cherry stems 200 can enter the open spaces between the adjacent teeth of the first side plate 21, the adjacent teeth of the second side plate 22 and the adjacent teeth of the knife member 23 (see fig.8 and 9a,b).

Now, if the power is turned on, the drive means urges the knife member 23 to slide backward and forward between plates 21,22. Teeth 230,230 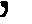 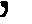 of knife member meet the stems on their way and cut them as shown in fig. 9c while leaving the cut end 200 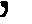 free. Fig.9a-e shows how only one stem 200 is being cut by a tooth 230 by virtue of sliding the knife member 23 in the left direction along arrow F. This direction will be referred to further as a forward direction.

It should be realized, however, that in practice, a plurality of stems simultaneously enters between the plurality of adjacent teeth and hence the simultaneous cutting action of the plurality of fruits is provided, thus improving efficiency of operation.

In order to avoid leaving sharp cut ends as usually takes place in prior state-of-the-art picking devices employing cutting action, the knife member 23 of the present invention is mounted between side plates in such a manner that a small gap δ is provided between the plurality of teeth 230,230 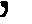 thereof and the plurality of teeth 220,220 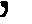 of the second side plate 22. By virtue of this gap the free cut end 200 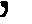 left after cutting the stem 200 can be bent and flattened by tooth 230 when it keeps on sliding in the same forward direction. This situation is depicted in fig. 9d.

In order to ensure proper cutting, bending and flattening action the value of gap δ, length of stroke of knife member in one direction as well distance h between adjacent teeth of side plates should be chosen in an appropriate manner. On the one hand, the value of gap δ should not be chosen so small as to obstruct the sliding motion of the teeth and, on the other hand, this gap should not be so wide that it prevents proper bending and flattening action. In practice it would be advantageous if the value of gap δ is 0,1-0,3 mm.

In order to enable both cutting and flattening of the free ends of stems after they have been cut by the teeth of the knife member, the length of stroke of the knife member in one direction should exceed the distance h between adjacent teeth of side plates 21,22. In practice if for example the distance h is 7 mm the distance of stroke should be 9 mm.

As can be seen in figs.9,21,23 oppositely facing edges of the teeth of the second plate and of the knife member are slightly radiused by respective radii R,r. By this provision flattening of cut ends of the stems is easier and more efficient. In practice radii R and r should be chosen to be more than gap δ.

Fig.9e shows the situation where cut end 200*'* is bent and flattened after knife member 23 has completed sliding in forward direction and reached its terminal position.

It should be understood, that the free ends of cut stems have a certain residual resiliency by virtue of which they slightly project above the radiused edges of the teeth of the second side plate 22.

Now if the knife member slides in the opposite backward direction along arrow B as depicted in fig. 9f, then tooth 230 thereof will meet the projecting end 200*'* of cut stem and will push it forward. This pushing action will cause the cut fruits 100 to fall down between the adjacent teeth of the second side plate 22. The harvested fruits fall down from the cutting assembly into the collecting chute 21 and are discharged therefrom via sleeve 22 into a collecting receptacle 23 (see fig. 7).
In order to effect the proper entering of the stems to be cut between the adjacent teeth of the side plates, two requirements should be satisfied:
- the disposition of knife member 23 with respect to the first side plate 21 is to be chosen in such a manner that teeth 230,230 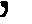 thereof and teeth 210,210 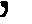 of plate 21 are in very close proximity; this is ensured if the distance between the opposing planes of plate 21 and knife member is not more than 0,01-0,02 mm.
- the teeth of the first side plate and of the knife member are provided with sharp edges (see figs. 20,21).

It can be easily appreciated that by virtue of two sharpened edges and two radiused edges formed on opposite sides of the teeth of the first and second plates, respectively, the reciprocating sliding motion of the knife member in either forward or backward direction will result in the cutting of stems with subsequent flattening of the free end of cut stems as explained above. The consequence of this mode of operation will be the prolonged shelf life of the freshly cut fruits when they are stored in bulk, since the flattened stems will no longer pierce the gentle skin of neighboring cherries.

Having explained the principle of the cutting and flattening action taking place by virtue of reciprocative sliding of the knife member between the side plates of cutting assembly it will now be shown with reference to figs.10,11 how this reciprocating sliding motion is effected.

Body portion 11 is provided with a housing for mounting therein of driving means 13 and of motor 12. The housing consists of a vertically extending cylindrical part 11 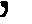 , configured in such a manner that it can be gripped comfortably by the operator, and of a horizontally extending upper part 11'' to which the cutting assembly 20 is attached. Cover 130 is provided to be attachable to upper part 11'' of the body portion 30 as to close the interior of the housing.

Electrical power is supplied to the motor 12 via wiring 14 connected through socket 14 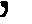 made in a housing. The motor 12 is situated within the cylindrical part of the body portion and is operative coupled with a driving means through the appropriate reduction gear (not shown).

The driving means 13 comprises a vertical spindle 131, extending along the cylindrical part of the body portion. The spindle 131 can be rotated by a motor 12 via the reduction gear when the power is on. Attached to the upper extremity of the spindle 131 a flywheel 132 is provided with a driving pin 133 eccentrically situated thereon. It can be realized, that when the spindle 131 is rotated by motor 12, the driving pin 133 is driven thereby in a circular motion.

Situated within the horizontal part 11'' of the body portion an elongated flat arm 134 is mounted therein with the possibility of swinging in a horizontal plane. The arm 134 is defined by forward 135 and rear 136 extremities thereof as well by a mean portion M situated therebetween, formed with an elongated slot 137. Slot 137 is defined by a width, which slightly exceeds the diameter of the driving pin. The width of slot should enable insertion of the driving pin 133 within the slot 137 and its cooperation with walls thereto when arm 134 is placed on flywheel 132. It can be readily appreciated, that by virtue of this arrangement the driving pin 133, while moving along circular trajectory and cooperating with slot 137, pushes arm 134 and urges it to swing.

Fixed within the upper part of the body portion are two guiding pins 138, 139 provided for cooperation with respective elongated guiding slots 140,141 formed respectively within the forward 135 and rear 136 extremities of the arm 137. By virtue of this provision swinging motion of the arm 134 is transformed into reciprocating sliding motion thereof in forward and backward direction along the longitudinal axis Y-Y. Since the forward extremity 135 of the arm 134 is connected with the knife member 23 it is also driven in a reciprocating manner between the side plates 21,22.

Now with reference to figs.10-23 construction of the cutting assembly 20 will be explained in more detail and how it is replaceably attached to the body portion.

The horizontal upper part 11'' of the body portion is formed with forward widening extremity 11*'''* for therein receiving the cutting assembly 20, constituted by first 21 and second 22 side plates and by knife member 23. As already mentioned, all these elements are formed as flat combs, defined by a base portion and by a plurality of teeth with free distance provided between adjacent teeth. This distance constitutes a free space for the entering of fruit stems and is to be chosen so as to exceed the thickness of the stem to be cut.

With reference to figs.17,18,19 there are respectively shown the adjacent teeth 210,210 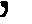 of the first side plate 21 divided by the free space 210'' therebetween, the adjacent teeth 220,220 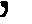 of the second side plate 22 divided by the free space 220'' therebetween and the adjacent teeth 230,230 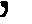 divided by the free space 230'' therebetween.

Both side plates 21,22 are of identical shape and are formed with respective mounting portions 21 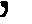 ,22 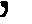 being configured so as to mate with the forward extremity 11*'''* of the upper part of the body portion. By virtue of this provision the side plates 21,22 can be replaceably attached to the forward extremity 11*'''* and adjusted thereon in such a manner that they become co-planar therewith, their respective longitudinal axles X-X coinciding with the longitudinal axis Y-Y of the horizontal upper part of the body portion. After adjusting the location of the side plates 21,22 they are secured on the forward extremity of the body portion by mounting screws 142,143.

Situated between side plates 21,22 the knife member 23 is provided, having rear extremity 231 thereof. This extremity is connected by an earring 144 with forward extremity 135 of arm 134 so as to receive reciprocating motion therefrom. In order to direct this motion co-linear with longitudinal axis Y-Y of arm 132 knife member 23 is formed with elongated guiding slots 144,145; guiding pins 146,147 are provided, which are directed perpendicular to the planes of the side plates 21,22 and are situated preferably on the longitudinal axes X-X thereof.

It can be seen with reference to fig. 16 that pins 146,147 also enable assembly of side plates 21,22 and situated therebetween knife member 23 in one cutting assembly 20. Thus assembled, all three components are oriented co-planar and the teeth of plates 21, 22 are aligned therebetween thus enabling easy entry of uncut stems in free spaces between the adjacent teeth.

The knife member is mounted between plates 21,22 in such a manner that a small gap δ is provided between the plane thereof and the plane of the lower plate 22. In contrast to this disposition the disposition of the plane of upper plate 21 is in close proximity to that of the knife member. The significance of this arrangement has already been explained above in connection with cutting and flattening of the free ends of the cut stems during the sliding motion of the knife member.

With reference to figs.14,15 there is shown respectively how knife member 23 is pulled by arm 135 in the rearmost terminal position thereof and then pushed from this position in the foremost terminal position thereof. As already explained both cutting of the stems and flattening of the free ends of cut stems is ensured when the length of stroke between rearmost and foremost terminal positions exceeds the distance h between adjacent teeth of the side plates 21,22.

With reference to figs. 17,18,19 the teeth of side plates 21,22 and of knife member 23 are formed with the elongated main portion terminating by sharpened ends. It is advantageous if the teeth of side plates are longer that those of the knife member and their width more than the width of the teeth of the knife member. This provision enables easier entry of the stems between the adjacent teeth and more reliable cutting and flattening thereof.

It is advantageous to provide the cutting assembly with a means for pushing leaves away. With reference to fig. 13 the pushing means can be formed, for example, as a plurality of the biased resilient springs 250, mounted on one of the side plates so as to project towards the branches and push the leaves away from the cutting assembly when the apparatus is brought into its working position. Fig.8 shows how a leaf 101 is pushed away from the cutting assembly by virtue of the resiliency of the biased spring 250, fastened on the second side plate 22.

The above described construction of the apparatus in accordance with the present invention enables efficient picking of cherries or other drupes by cutting of stems thereof with subsequent bending and flattening of cut stems.

It should also be understood that changes and modifications can be made in the above described apparatus by one ordinary skilled in the art without deviation from the scope of the invention.

The scope of the present invention is defined in the appended claims.

The features disclosed in the foregoing description, in the following claims and/or in the accompanying drawings may, both separately and in any combination thereof, be material for realizing the invention in diverse forms thereof.

## Claims

1. An apparatus for picking of fruits with stems, e.g. cherries, said apparatus comprising:
- a body portion for mounting thereon a cutting assembly provided with a knife member, enabling the cutting of stems
- a drive means, provided with a motor and being operatively coupled with said cutting assembly so as to establish a reciprocating sliding motion of said knife member
- a source of energy for activating said drive means, characterized in that said cutting assembly is formed as the first and second oppositely situated side plates with said knife member being located therebetween with the possibility for relative reciprocating sliding motion forwards and backwards along said plates; said knife member and said side plates being configured as elongated combs, defined by a plurality of teeth, interspaced by a distance and said side plates being situated in such a manner, that their teeth are aligned therebetween so as to enable receipt of the uncut stems between adjacent teeth; the teeth of said first side plate and of knife member are formed with at least one sharp edge, enabling cutting of stems entering therebetween; the teeth of said second side plate are formed with at least one edge enabling flattening of free ends of cut stems during sliding motion of said knife member in either forward or backward direction.

2. An apparatus as defined in claim 1, characterized in that the distance between adjacent teeth of said side plates is less than the length of stroke of said knife member in either forward or backward direction, wherein said knife member is situated between said side plates in such a manner that the plane thereof facing the first side plate is in close proximity thereto and the plane thereof facing said second side plate is spaced therefrom by a gap.

3. An apparatus as defined in claim 2, characterized in that the mutually facing edges of the teeth of said first side plate and of said knife member are sharpened so as to enable efficient cutting of stems and mutually facing edges of teeth of said second side plate and of said knife member are radiused so as to enable flattening of the free ends of cut stems.

4. An apparatus as defined in claim 3, characterized in that it is formed as a portable, compact hand-operated picker, wherein said drive means is mounted within said body portion and said source of energy is attached to a belt to be worn by an operator.

5. An apparatus as defined in claim 3, characterized in that it is provided with a pushing means to push leaves away from said cutting assembly, said pushing means being formed as a plurality of spring members, attached to one of said side guiding plates.

6. An apparatus as defined in claim 3, characterized in that it is provided with a chute for receiving picked fruits and discharging thereof into collecting receptacle.
